# EUROPÄISCHE PATENTSCHRIFT

(11) **EP 3 449 713 B1**
(45) Veröffentlichungstag und Bekanntmachung des Hinweises auf die Patenterteilung: **21.07.2021**
(21) Anmeldenummer: 18174908.6
(22) Anmeldetag: 29.05.2018
(51) Int. Cl.: A01D 43/10, A01D 43/08

(54) **FELDHÄCKSLER SOWIE VERFAHREN ZU DESSEN UMRÜSTUNG**
FIELD CHOPPER AND METHOD FOR CHANGING OVER A TOOL
RAMASSEUSE-HACHEUSE ET SON PROCÉDÉ DE CONVERSION

(30) Priorität: 29.08.2017 DE 102017119796
(43) Veröffentlichungstag der Anmeldung: 06.03.2019
(73) Patentinhaber: CLAAS Selbstfahrende Erntemaschinen GmbH, 33428 Harsewinkel (DE)
(72) Erfinder: Rathjens, Jochen, 33602 Bielefeld (DE)
(74) Vertreter: CLAAS Gruppe

(56) Entgegenhaltungen:
- EP-A1- 1 530 894
- EP-B1- 2 532 222
- DE-A1- 4 215 696
- DE-A1-102010 002 509
- DE-A1-102014 007 113
- US-B2- 8 348 001

## Beschreibung

Die vorliegende Anmeldung betrifft einen Feldhäcksler zum Häckseln von auf einem Arbeitsfeld befindlichem Erntegut, umfassend ein Konditionierorgan sowie mindestens zwei Raupenlaufwerke.

Weiterhin betrifft die vorliegende Anmeldung ein Verfahren zur Umrüstung eines Feldhäckslers, wobei das Konditionierorgan aus dem übrigen Feldhäcksler entnommen wird.

Feldhäcksler sowie Verfahren zu deren Umrüstung sind im Stand der Technik bereits bekannt. Hierzu wird beispielhaft auf die Europäische Patentschrift EP 2 532 222 B1 verwiesen, die einen mit einem Konditionierorgan ausgestatteten Feldhäcksler offenbart.

Ein Feldhäcksler gemäss dem Oberbegriff von Anspruch 1 und ein Verfahren gemäss dem Anspruch 7 sind aus der US Patentschrift US 8348001 B2 bekannt.

Wie vorstehend bereits angedeutet, wird ein Konditionierorgan primär im Rahmen der Maisernte verwendet, um die Maiskörner zu zerreiben und dadurch für die Verwertung des Ernteguts aufzubereiten. Dabei versteht es sich, dass ein Feldhäcksler grundsätzlich nicht nur zur Maisernte eingesetzt wird, sondern zudem beispielsweise im Bereich der Grasernte. Hierbei wird das bereits geschnittene Gras mittels des Feldhäckslers aufgenommen, zerkleinert und sodann durch das Auswurforgan beispielsweise in einen Transportwagen überführt. Einer Konditionierung mittels eines Konditionierorgans bedarf das Gras in aller Regel nicht, sodass das Konditionierorgan für eine solche beispielhafte Verwendung des Feldhäckslers üblicherweise ausgebaut wird.

Weiterhin ist es denkbar, dass für unterschiedliche Verwendungszwecke des Ernteguts verschiedene Ausgestaltungen von Konditionierorganen verwendet werden. Verschiedene Konditionierorgane können sich beispielsweise in der Ausgestaltung ihrer Walzen unterscheiden und auf diese Weise für verschiedene Anwendungsfälle besser oder schlechter geeignet sein. Mithin besteht regelmäßig das Bedürfnis, ein jeweiliges, in den Feldhäcksler eingebautes Konditionierorgan gegen ein jeweils anderes Konditionierorgan zu tauschen.

In jedem Fall ist regelmäßig ein Aus- und Wiedereinbau eines oder mehrerer Konditionierorgane aus dem bzw. in den Feldhäcksler erforderlich. Dieser in der vorliegenden Anmeldung als "Umrüstung" beschriebene Prozess gestaltet sich im Stand der Technik vergleichsweise schwierig, da das Konditionierorgan bei Vorliegen in seiner Aktivposition nur schlecht zugänglich ist und sich - relativ zu einer Längsachse des Feldhäckslers betrachtet - in aller Regel in einem Längsbereich der vorderen Bereifung des Feldhäckslers befindet. Hierdurch ist ein Zugriff auf das Konditionierorgan in aller Regel lediglich von einer Unterseite des Feldhäckslers her möglich.

Der vorliegenden Anmeldung liegt mithin die Aufgabe zugrunde, einen Feldhäcksler wie ein Verfahren zu dessen Umrüstung bereitzustellen, die gegenüber dem Stand der Technik einen vereinfachten Ausbau des Konditionierorgans ermöglichen.

Die zugrunde liegende Aufgabe wird erfindungsgemäß mittels eines Feldhäckslers mit den Merkmalen des Anspruchs 1 gelöst. Dieser Feldhäcksler verfügt erfindungsgemäß über einen Freiquerschnitt, der an einer Ausbauseite des Feldhäckslers angeordnet ist. Dieser Freiquerschnitt ist derart ausgebildet, dass das Konditionierorgan durch den Freiquerschnitt hindurch ausgehend von seiner Passivposition seitlich aus dem Feldhäcksler entnehmbar ist, wobei der Freiquerschnitt oberhalb des der Ausbauseite zugeordneten Raupenlaufwerks angeordnet ist.

Ein "Arbeitsorgan" bezeichnet grundsätzlich ein Organ des Feldhäckslers, das dazu geeignet ist, das Erntegut in irgendeiner Weise zu bearbeiten und/oder verarbeiten. Somit kann ein Feldhäcksler neben dem bereits genannten Konditionierorgan beispielsweise ferner noch ein Förderorgan, ein Häckselorgan, ein Beschleunigungsorgan, ein Auswurforgan und/oder andere Arbeitsorgane verfügen.

Das "Konditionierorgan" dient vor allem im Zusammenhang mit der Maisernte dem Zweck, die Maiskörner "aufzureiben". Dies ist für die Verwertung des Ernteguts sowohl im Bereich der Futterverwertung als auch als Einsatzstoff für eine Biogasanlage von Bedeutung, da die einzelnen Maiskörner umso besser verwertet werden können, desto feiner sie zerrieben sind. Typischerweise verfügt ein Konditionierorgan über zwei gegenläufig drehantreibbare Walzen, die mit unterschiedlichen Drehzahlen betrieben werden. Die Walzen begrenzen zwischen sich einen Arbeitsspalt, durch den das gehäckselte, zunächst unkonditionierte Erntegut hindurch geführt wird, wobei aufgrund des Drehzahlunterschieds zwischen die Walzen bzw. deren Oberflächen im Bereich des Arbeitsspalts eine tangentiale Relativbewegung zueinander ausführen, die letztlich das Aufreiben des Ernteguts bewirkt.

Bei Vorliegen in seiner Aktivposition wirkt das Konditionierorgan derart mit übrigen Arbeitsorganen zusammen, dass das Erntegut das Konditionierorgan durchströmt und mittels des Konditionierorgans bearbeitbar ist. Demgegenüber wird das Erntegut dem Konditionierorgan dann nicht zugeführt, wenn letzteres sich in seiner Passivposition befindet. Diese Passivposition kann insbesondere gegenüber der Aktivposition um ein gewisses Längenmaß relativ zu einer Längsachse des Feldhäckslers betrachtet in Richtung eines rückwärtigen Endes des Feldhäckslers versetzt sein. Grundsätzlich kann die Passivposition jedoch auch rein örtlich betrachtet mit der Aktivposition identisch sein, sodass sich beide Positionen im Endeffekt lediglich dahingehend voneinander unterscheiden, dass das Konditionierorgan bei Vorliegen in seiner Aktivposition sich in einem Wirkverbund mit den übrigen Arbeitsorganen befindet, während es bei Vorliegen in seiner Passivposition aus diesem Wirkverbund herausgelöst ist.

Typischerweise geht die Überführung des Konditionierorgans zwischen dessen Aktivposition und Passivposition mit einer Bewegung des Konditionierorgans relativ zu dem übrigen Feldhäcksler einher, wobei bei Vorliegen des Konditionierorgans in seiner Passivposition ein Gutfluss des Ernteguts an der Stelle, an der sich ansonsten das Konditionierorgan befindet, beispielsweise mittels eines Kanalelements geführt werden kann.

Bei den "Raupenlaufwerken" handelt es sich im Vergleich zu typischen Rundrädern um Übertragungselemente, mittels derer ein Antriebsmoment des Feldhäckslers auf einem jeweiligen Untergrund übertragbar ist, sodass der Feldhäcksler sich relativ zu dem Untergrund bewegen kann. Typischerweise sind die Raupenlaufwerke in Form von "flachen Raupen" ausgeführt, was bedeutet, dass der Laufgurt sich zumindest in einem oberen Abschnitt, vorzugsweise ferner in seinem unteren Abschnitt, zumindest im Wesentlichen parallel zu dem Untergrund erstreckt. Dies unterscheidet derartige Raupenlaufwerke insbesondere von solchen, bei denen der Laufgurt auf einer im Wesentlichen dreiecksförmigen Laufbahn umläuft.

Unter dem "Freiquerschnitt" wird im Sinne der vorliegenden Anmeldung gewissermaßen ein freier Bereich verstanden, der derart frei von Einbauten ausgebildet ist, dass das Konditionierorgan durch ihn hindurch geführt werden kann. Insbesondere kann der Freiquerschnitt in Form einer Ausnehmung in einem Gehäuse des Feldhäckslers ausgebildet sein, die beispielsweise mittels einer Klappe oder Tür verschließbar ist.

Unter der "Ausbauseite" des Feldhäckslers wird eine jeweilige Längsseite des Feldhäckslers verstanden, an der das Konditionierorgan ausgebaut werden kann, das heißt an der der Freiquerschnitt angeordnet ist.

Der erfindungsgemäße Feldhäcksler hat viele Vorteile. Insbesondere ist es möglich, das Konditionierorgan nunmehr seitlich aus dem Feldhäcksler zu entnehmen und nicht - wie im Stand der Technik - nach unten oder nach hinten entnehmen zu müssen. Die seitliche Entnahme durch den erfindungsgemäßen Freiquerschnitt hindurch ermöglicht dabei insbesondere den Einsatz einer Entnahmeeinrichtung, die beispielsweise in Form eines Ausbauwerkzeugs ausgebildet sein kann. Ein derartiges Ausbauwerkzeug kann insbesondere maschinengestützt geführt sein, beispielsweise mittels eines Hubstaplers oder dergleichen. Auf diese Weise ist sowohl die Entnahme eines Konditionierorgans aus dem Feldhäcksler heraus als auch ein Wiedereinsetzen eines Konditionierorgans in den Feldhäcksler besonders einfach und vor allem zügig möglich.

Der Freiquerschnitt befindet sich in Längsrichtung des Feldhäckslers betrachtet innerhalb eines Längsbereich der Raupenlaufwerke bzw. desjenigen Raupenlaufwerks, das der Ausbauseite des Feldhäckslers zugeordnet ist. Mit anderen Worten ist der Freiquerschnitt derart angeordnet, dass er sich oberhalb des jeweiligen Raupenlaufwerks an der Ausbauseite des Feldhäckslers befindet. Dem liegt die Überlegung zugrunde, dass der seitliche Ausbau bzw. Einbau eines Konditionierorgans grundsätzlich dadurch ermöglicht wird, dass der Feldhäcksler mit Raupenlaufwerken ausgestattet ist. Diese weisen im Vergleich zu normalen Rundrädern eine deutlich geringere Höhe auf, sodass oberhalb der Raupenlaufwerke zusätzlicher Raum zur Verfügung steht. Dieser wird hier erfindungsgemäß zur Positionierung des Freiquerschnitts und somit zur Umrüstung des Feldhäckslers genutzt. Wäre der Feldhäcksler mit normalen runden Vorderreifen ausgestattet, könnte der Freiquerschnitt kaum in vorteilhafterweise an dem Feldhäcksler ausgebildet werden.

Entsprechend ist es von besonderem Vorteil, wenn eine vertikal ausgehend von einem Untergrund gemessene Höhe zumindest desjenigen Raupenlaufwerks, dass auf der Ausbauseite des Feldhäckslers angeordnet ist, an einer höchsten Stelle des Raupenlaufwerks maximal 100 cm beträgt. Vorzugsweise beträgt die Höhe maximal 90 cm, weiter vorzugsweise maximal 80 cm. Bei einer solchen Ausführung des jeweiligen Raupenlaufwerks besteht für die Ausgestaltung des erfindungsgemäßen Freiquerschnitts besonders viel Spielraum.

Weiterhin ist ein solcher Feldhäcksler besonders vorteilhaft, dessen Haupträder der Raupenlaufwerke zumindest im Wesentlichen den gleichen Durchmesser aufweisen, sodass der die Haupträder umspannende Laufgurt sich zwischen den Haupträdern zumindest im Wesentlichen parallel zu einer Verbindungsachse erstreckt, die die Naben der beiden Haupträder beinhaltet. Insbesondere bezogen auf einen oberen Abschnitt des Laufgurts sind hierbei insbesondere Abweichungen des parallelen Verlaufs infolge eines Durchhängens des Laufgurts vernachlässigbar. Die beschriebene Ausgestaltung stellt sicher, dass sich der Laufgurt insgesamt auf einem vergleichsweise niedrigen Niveau relativ zu dem Feldhäcksler betrachtet erstreckt und somit insbesondere an der Ausbauseite des Feldhäckslers in vertikale Richtung betrachtet wenig Raum beansprucht. Letzterer steht somit zur Verfügung, um den erfindungsgemäßen Freiquerschnitt an der Ausbauseite in vorteilhafterweise positionieren zu können.

Insbesondere ist eine solche Ausgestaltung zu bevorzugen bei der der Laufgurt sich in vertikale Richtung betrachtet durchgehend unterhalb einer Unterkante des sich in seiner Passivposition befindlichen Konditionierorgans erstreckt. Bei dieser Ausführung kann das Konditionierorgan ohne Weiteres seitlich aus dem Feldhäcksler entnommen werden, ohne dass im Zuge der Entnahme das Konditionierorgan extra über das jeweilige Raupenlaufwerk hinweg angehoben werden muss, da sich das Konditionierorgan ohnehin bereits oberhalb des Raupenlaufwerks befindet. Die Entnahmebewegung des Konditionierorgans kann somit zumindest im Wesentlichen vollständig horizontal orientiert sein.

Den erfindungsgemäßen Feldhäcksler weiter ausgestaltend ist das Konditionierorgan zu Überführung von seiner Aktivposition in seine Passivposition in eine Richtung parallel zu einer Längsachse des Feldhäckslers nach hinten bewegbar, wobei diese Bewegung mittels einer Führungseinrichtung ausführbar ist. Die Führungseinrichtung kann beispielsweise von einer oder mehreren sich parallel zu der Längsachse des Feldhäckslers erstreckenden Schienen gebildet sein, entlang derer das Konditionierorgan bewegt werden kann, beispielsweise mittels eines Kettenantriebs. Die Bewegung des Konditionierorgans "nach hinten" bietet den besonderen Vorteil, dass das Konditionierorgan zunächst aus dem Wirkverbund mit den übrigen Arbeitsorganen herausgelöst werden kann und sodann derart "frei" ist, dass es ohne eine Beeinflussung anderer Bauteile des Feldhäckslers aus selbigem entnehmbar ist.

Weiterhin wird die zugrunde liegende Aufgabe erfindungsgemäß das Verfahren mit den Merkmalen des Anspruchs 7 gelöst. Dieses umfasst insbesondere den folgenden Verfahrensschritt:
Das Konditionierorgan wird an einer Ausbauseite des Feldhäckslers in eine Richtung quer zu einer Längsachse des Feldhäckslers seitlich des Feldhäckslers sowie oberhalb eines der Ausbauseite zugeordneten Raupenlaufwerks aus dem übrigen Feldhäcksler entnommen.

Das erfindungsgemäße Verfahren ist mittels des erfindungsgemäßen Feldhäckslers besonders einfach durchführbar. Insbesondere kann das Konditionierorgan in die Richtung quer zu der Längsachse des Feldhäckslers besonders einfach durch den erfindungsgemäßen Freiquerschnitt hindurch geführt werden. Die sich hieraus ergebenden Vorteile sind vorstehend bereits beschrieben, wobei insbesondere gegenüber dem Stand der Technik das umständliche Ausbauen bzw. Einbauen eines jeweiligen Konditionierorgans von einer Unterseite des Feldhäckslers her vermieden wird. Die Umrüstung des Feldhäckslers insgesamt wird hierdurch verkürzt und vereinfacht.

Vorteilhafterweise wird das Konditionierorgan in Längsrichtung des Feldhäckslers betrachtet innerhalb eines Längsbereichs des der Ausbauseite zugeordneten Raupenlaufwerks entnommen. Diese Stelle des Feldhäckslers ist besonders einfach zugänglich, was insbesondere durch die Verwendung der Raupenlaufwerke unterstützt wird, da diese - wie vorstehend beschrieben - im Vergleich zu normalen Rundreifen eine deutlich geringere Höhe aufweisen und somit oberhalb ihres Laufgurts an dem Feldhäcksler einen Freiraum belassen, der sodann zur Umrüstung des Feldhäckslers in der beschriebenen Weise nutzbar ist.

Weiterhin ist es von Vorteil, wenn das Konditionierorgan ausgehend von seiner Aktivposition zunächst in eine Richtung parallel zu der Längsachse des Feldhäckslers nach hinten bewegt wird bis es sich in seiner Passivposition befindet, bevor es schließlich seitlich aus dem Feldhäcksler entnommen wird. Vorzugsweise befindet sich das Konditionierorgan bei Vorliegen in seiner Passivposition in einem Bereich des Freiquerschnitts, sodass die seitliche Entnahme des Konditionierorgans mittels einer zumindest im Wesentlichen ausschließlich horizontalen Bewegung vorgenommen werden kann.

Wie vorstehend bereits angedeutet, ist das erfindungsgemäße Verfahren ferner dann von besonderem Vorteil, wenn das Konditionierorgan mittels einer Entnahmeeinrichtung aus dem Feldhäcksler entnommen wird, wobei das Konditionierorgan zunächst ausgehend von seiner Passivposition aus seinem Lager angehoben und sodann seitlich aus dem Feldhäcksler entnommen wird. Das Anheben des Konditionierorgans findet vorzugsweise lediglich in einem sehr geringen Umfang statt, der dazu erforderlich ist, einen Kontakt des Konditionierorgans mit einer Lagerfläche, auf der es bei Vorliegen in seiner Passivposition aufliegt, zu lösen, sodass das Konditionierorgan fortan frei an der Entnahmeeinrichtung hängt. Die Entnahmeeinrichtung kann insbesondere in Form eines Gabelzinkens einer Gabel eines Hubstaplers gebildet sein und beispielsweise mittels einer individualisierten Aufnahme für das Konditionierorgan ausgestattet sein. Entscheidend ist dabei lediglich, dass die Entnahmeeinrichtung in Kraft übertragender Weise mit dem Konditionierorgan verbindbar ist, sodass das Konditionierorgan mittels der Entnahmeeinrichtung relativ zu dem Feldhäcksler bewegbar ist. Auf diese Weise kann ein jeweiliges Konditionierorgan sehr schnell und zudem sehr bequem für den Anwender aus dem Feldhäcksler entnommen und selbstverständlich umgekehrt ebenso wieder in den Feldhäcksler eingesetzt werden.

Der erfindungsgemäße Feldhäcksler sowie das erfindungsgemäße Verfahren werden nachstehend anhand eines Ausführungsbeispiels, das in den Figuren dargestellt ist, näher erläutert. Es zeigt:
- Fig. 1:: Eine Ansicht einer Ausbauseite eines erfindungsgemäßen Feldhäckslers und
- Fig. 2:: Eine perspektivische Teilansicht eines Frontbereichs des Feldhäckslers gemäß Figur 1 und
- Fig. 3:: Eine weitere perspektivische Teilansicht des Frontbereichs des Feldhäckslers gemäß Figur 1.

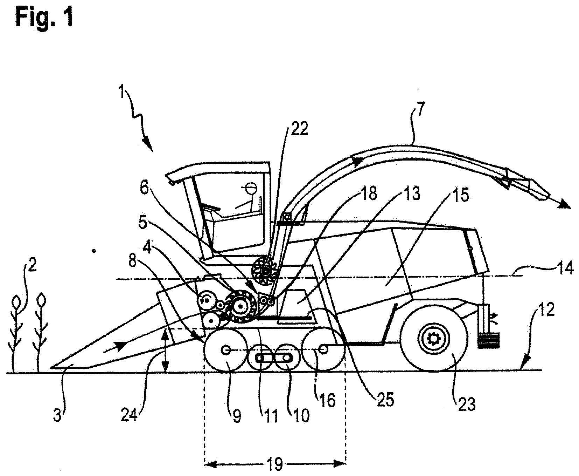

Das Ausführungsbeispiel, das in den **Figuren 1 bis 3** gezeigt ist, umfasst einen erfindungsgemäßen Feldhäcksler **1,** der mit einem Schneidorgan **3,** einem Förderorgan **4,** einem Häckselorgan **5,** einem Konditionierorgan **6,** einem Auswurforgan **7** sowie einem Beschleunigungsorgan **22** ausgestattet ist. Diese Organe bilden gemeinsam die Arbeitsorgane des gezeigten Feldhäckslers **1,** mittels dessen Erntegut **2** verarbeitbar ist. Letzteres wird zunächst mittels des Schneidorgans **3** geschnitten, sodann mittels des Förderorgans **4** in Richtung des Häckselorgans **5** befördert und mittels des letzteren gehäckselt. Anschließend wird das gehäckselte Erntegut **2** dem stromabwärts des Häckselorgans **5** angeordneten Konditionierorgan **6** zugeführt, das hier über zwei gegenläufig drehantreibbare Walzen **18** verfügt, die zwischen sich einen Arbeitsspalt begrenzen. Mittels des Konditionierorgans **6** wird das gehäckselte Erntegut **2** "aufgerieben" und dadurch für die weitere Verwendung aufbereitet. Anschließend wird das gehäckselte sowie konditionierte Erntegut **2** mittels des Beschleunigungsorgans **22** beschleunigt und schließlich dem Auswurforgan **7** zugeführt, mittels dessen das Erntegut **2** beispielsweise in Richtung eines Transportfahrzeugs aus dem Feldhäcksler **1** auswerfbar ist.

Der erfindungsgemäße Feldhäcksler **1** ist beidseitig seiner Vorderachse mit Raupenlaufwerken **8** ausgestattet. Diese umfassen jeweils zwei in Längsrichtung des Feldhäckslers **1** hintereinander angeordnete Haupträder **9** sowie zwei zwischen den Haupträder **9** angeordnete Hilfsräder **10.** Jedes der Raupenlaufwerke **8** verfügt zudem über einen Laufgurt **11,** der die Haupträder **9** umspannt. Die Haupträder **9** weisen jeweils den gleichen Durchmesser auf, sodass sich der Laufgurt **11** zwischen den Haupträder **9** parallel zu einer Verbindungsachse **16** erstreckt, auf der Naben der beiden Haupträder **9** liegen. Mittels dieser Konstruktion ist sichergestellt, dass die Raupenlaufwerke **8** vergleichsweise flach bauen, wobei sie in dem gezeigten Beispiel von einer sich ausgehend von einer Oberfläche **12** eines jeweiligen Arbeitsfeldes erstreckende Höhe **24** von ca. 90 cm aufweisen. Die Höhe **24** beschreibt dabei die Höhe der jeweils höchsten Stelle des Raupenlaufwerks **8,** das aufgrund des zumindest im Wesentlichen horizontalen Verlaufs des Laufgurts **11** zwischen den Haupträder **9** gewissermaßen eine obere Ebene ausbildet, die von einem oberen Abschnitt des Laufgurts **11** gebildet ist. Ein Höhenniveau des Raupenlaufwerks **8** ist über diese obere Ebene hinweg zumindest im Wesentlichen konstant. Da die Haupträder **9** des jeweiligen Raupenlaufwerks **8** hintereinander angeordnet sind, erstreckt sich das Raupenlaufwerk **8** insgesamt über einen parallel zu einer Längsachse **14** des Feldhäckslers **1** gemessenen Längsbereich **19.** An seiner Hinterachse verfügt der Feldhäcksler **1** über ein typisches Hinterrad **23.**

**Figur 1** zeigt eine Seite des erfindungsgemäßen Feldhäckslers **1,** die einer Ausbauseite **15** desselben entspricht. Das heißt, dass das Konditionierorgan **6** erfindungsgemäß an dieser Ausbauseite **15** seitlich aus dem Feldhäcksler **1** entnehmbar ist. Hierzu verfügt der Feldhäcksler **1** über einen Freiquerschnitt **13,** die hier in Form eines Trapezes ausgebildet ist. Der Freiquerschnitt **13** ist oberhalb des der Ausbauseite **15** zugeordneten Raupenlaufwerks **8** angeordnet und befindet sich innerhalb des Längsbereichs **19** des Raupenlaufwerks **8.** Weiterhin ist der Freiquerschnitt **13** derart positioniert, dass er sich in Längsrichtung des Feldhäckslers **1** betrachtet hinter dem in seiner Aktivposition vorliegenden Konditionierorgan **6** befindet.

Zur Umrüstung des Feldhäckslers **1,** die hier in einem Ausbau des Konditionierorgans **6** bestehen soll, wird nunmehr das Konditionierorgan **6** zunächst erfindungsgemäß ausgehend von seiner in **Figur 1** dargestellten Aktivposition in seine Passivposition überführt. Hierzu wird das Konditionierorgan **6** aus seinem Wirkverbund mit den anderen Arbeitsorganen **3, 4, 5, 22, 7** herausgelöst und mittels einer Schiene **25** in eine Richtung parallel zu der Längsachse **14** des Feldhäckslers **1** nach hinten bewegt. Seine Passivposition hat das Konditionierorgan **6** erreicht, sobald es auf der Schiene **25** so weit nach hinten bewegt wurde, dass es sich im Bereich des Freiquerschnitts **13** befindet. Sodann kann das Konditionierorgan **6** ausgehend von seiner Passivposition seitlich aus dem Feldhäcksler **1** entnommen werden, wobei das Konditionierorgan **6** zumindest im Wesentlichen ausschließlich eine quer zu der Längsachse **14** des Feldhäckslers **1** orientierte Bewegung ausführt. Mit anderen Worten wird das Konditionierorgan **6** erfindungsgemäß oberhalb des Raupenlaufwerks **8** seitlich aus dem Feldhäcksler **1** entnommen. Eine aus dem Stand der Technik bekannte Entnahme des Konditionierorgans **6** an einer Unterseite des Feldhäckslers **1** entfällt somit.

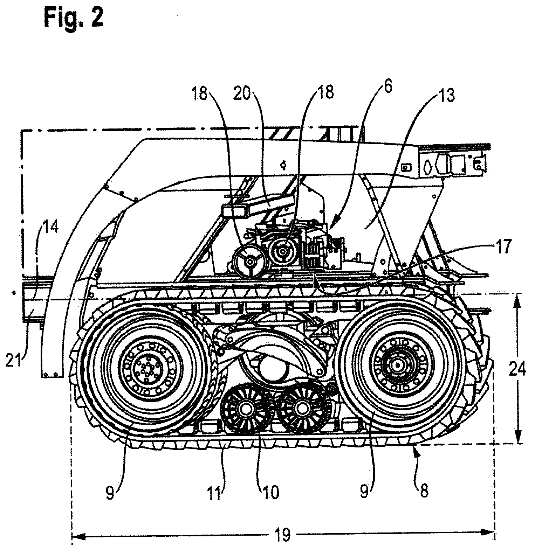

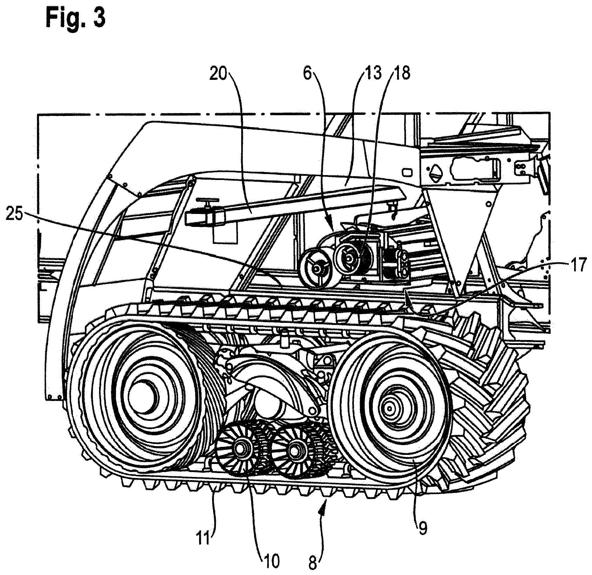

Der Freiquerschnitt **13** sowie eine zur Entnahme des Konditionierorgans **6** verwendete Entnahmeeinrichtung **20** sind insbesondere in den **Figuren 2** **und** **3** erkennbar. Diese verdeutlichen zudem, dass sich eine Unterkante **17** des Konditionierorgans **6** durchgehend oberhalb einer höchsten Stelle des der Ausbauseite **15** zugeordneten Raupenlaufwerks **8** befindet, wodurch sichergestellt ist, dass das Konditionierorgan **6** mittels einer rein horizontalen Bewegung aus dem Feldhäcksler **1** entnehmbar ist. Eine Kollision mit dem Raupenlaufwerk **8** ist dabei nicht zu befürchten. In der in den **Figuren 2** **und** **3** gezeigten Situation befindet sich das Konditionierorgan **6** in seiner Passivposition, in der es entlang eines Hauptträger **21** eines Tragrahmens des Feldhäckslers **1** in eine Richtung parallel zu der Längsachse **14** des Feldhäckslers **1** gegenüber seiner Aktivposition nach hinten bewegt ist. Bei Vorliegen in seiner Passivposition ist das Konditionierorgan **6** mittels einer Entnahmeeinrichtung **20** erreichbar, die dazu geeignet ist, das Konditionierorgan **6** an dessen Oberseite zu greifen. Die Entnahmeeinrichtung **20** ist in dem gezeigten Beispiel als Zubehörteil für einen Hubstapler ausgebildet, der in den Figuren nicht dargestellt ist. Das Konditionierorgan **6** kann somit ausgehend von seiner Passivposition aus seiner Lagerung angehoben und sodann mittels der Entnahmeeinrichtung **20** in eine Richtung quer zu der Längsachse **14** des Feldhäckslers **1** durch den Freiquerschnitt **13** hindurch aus dem Feldhäcksler **1** entnommen werden. Das Anheben des Konditionierorgans **6** findet dabei lediglich in solchen Umfang statt, dass das Konditionierorgan **6** seinen Kontakt mit seiner Lagerfläche, auf der es bei Vorliegen in seiner Passivposition aufliegt, verliert. Dies hat zur Folge, dass die Ausbaubewegung des Konditionierorgans **6** ausgehend von dessen Passivposition im Wesentlichen von einer reinen Horizontalbewegung gebildet ist.

Es versteht sich, dass dasselbe oder ein anderes Konditionierorgan **6** auf dieselbe Weise besonders einfach wieder in den Feldhäcksler **1** eingebaut werden kann, auf die es in der beschriebenen Weise aus letzterem ausgebaut wurde.

Sämtliche im Zusammenhang mit dem vorstehend beschriebenen Ausführungsbeispiel verwirklichten Merkmale können grundsätzlich auch unabhängig voneinander vorteilhaft wirken und sind nicht zwingend auf die hier dargelegte Merkmalskombination angewiesen, soweit die Merkmale nicht in den unabhängigen Ansprüchen kombiniert sind.

### Bezugszeichenliste

- 1: Feldhäcksler
- 2: Erntegut
- 3: Schneidorgan
- 4: Förderorgan
- 5: Häckselorgan
- 6: Konditionierorgan
- 7: Auswurforgan
- 8: Raupenlaufwerk
- 9: Hauptrad
- 10: Hilfsrad
- 11: Laufgurt
- 12: Oberfläche des Arbeitsfeldes
- 13: Freiquerschnitt
- 14: Längsachse des Feldhäckslers
- 15: Ausbauseite des Feldhäckslers
- 16: Verbindungsachse
- 17: Unterkante des Konditionierorgans
- 18: Walze
- 19: Ausdehnungsbereich des Raupenlaufwerks
- 20: Entnahmeeinrichtung
- 21: Hauptträger
- 22: Beschleunigungsorgan
- 23: Hinterrad
- 24: Höhe
- 25: Schiene

## Patentansprüche

1. Feldhäcksler (1) zum Häckseln von Erntegut (2), umfassend
- mindestens ein Konditionierorgan (6) zur Konditionierung von gehäckseltem Erntegut (2) sowie
- mindestens zwei, an einander gegenüberliegenden Enden einer Vorderachse des Feldhäckslers (1) angeordnete Raupenlaufwerke (8),
wobei mittels des Konditionierorgans (6) das Erntegut (2) zumindest teilweise zerreibbar ist,
wobei die Raupenlaufwerke (8) jeweils zwei in Längsrichtung des Feldhäckslers (1) hintereinander sowie einander gegenüberliegende Haupträder (9), mindestens ein zwischen den Haupträdern (9) angeordnetes Hilfsrad (10) sowie mindestens einen die Haupträder (9) umspannenden Laufgurt (11) aufweisen, **dadurch gekennzeichnet, dass**
das Konditionierorgan (6) ausgehend von einer Aktivposition, in der es sich in einem Wirkverbund mit übrigen Arbeitsorganen des Feldhäckslers (1) befindet, in eine Passivposition überführbar ist, in der das Konditionierorgan (6) aus dem Wirkverbund herausgelöst ist,
wobei das Konditionierorgan ausgehend von seiner Passivposition aus dem übrigen Feldhäcksler (1) entnehmbar ist, und dass sich
an einer Ausbauseite (15) des Feldhäckslers (1) ein Freiquerschnitt (13) befindet, durch den hindurch das Konditionierorgan (6) ausgehend von seiner Passivposition seitlich des Feldhäckslers sowie oberhalb des der Ausbauseite (15) zugeordneten Raupenlaufwerks (8) aus dem übrigen Feldhäcksler (1) entnehmbar ist.

2. Feldhäcksler (1) nach Anspruch 1, **dadurch gekennzeichnet, dass** das Konditionierorgan (6) zur Überführung von seiner Aktivposition in seine Passivposition mittels einer Führungseinrichtung in eine zu einer Längsachse (14) des Feldhäckslers (1) parallele Richtung nach hinten bewegbar ist.

3. Feldhäcksler (1) nach einem der Ansprüche 1 oder 2, **dadurch gekennzeichnet, dass** die Haupträder (9) mindestens eines der Raupenlaufwerke (8), vorzugsweise beider Raupenlaufwerke (8), den gleichen Durchmesser aufweisen.

4. Feldhäcksler (1) nach einem der Ansprüche 1 bis 3, **dadurch gekennzeichnet, dass** der Laufgurt (11) zumindest desjenigen Raupenlaufwerks (8), das auf der Ausbauseite (15) des Feldhäckslers (1) angeordnet ist, sich durchgehend - in vertikale Richtung betrachtet - unterhalb einer Unterkante (17) des sich in seiner Passivposition befindlichen Konditionierorgans (6) erstreckt.

5. Feldhäcksler (1) nach einem der Ansprüche 1 bis 4, **dadurch gekennzeichnet, dass** eine vertikal ausgehend von einem Untergrund gemessene Höhe (24) zumindest desjenigen Raupenlaufwerks (8), das auf der Ausbauseite (15) des Feldhäckslers (1) angeordnet ist, an einer höchsten Stelle des Raupenlaufwerks (8) maximal 100 cm, vorzugsweise maximal 90 cm, weiter vorzugsweise maximal 80 cm, beträgt.

6. Feldhäcksler (1) nach einem der Ansprüche 1 bis 5, **dadurch gekennzeichnet, dass** das Konditionierorgan (6) mindestens zwei jeweils um ihre Längsachse drehantreibbare Walzen (18) aufweist, die zwischen sich einen Arbeitsspalt begrenzen, sodass dem Konditionierorgan (6) zugeführtes Erntegut im Zuge des Durchtritts durch den Arbeitsspalt mittels der Walzen zerreibbar ist.

7. Verfahren zur Umrüstung eines Feldhäckslers (1), der Feldhäcksler (1) umfassend
- mindestens ein Konditionierorgan (6), mittels dessen ihm zugeführtes, gehäckseltes Erntegut (2) zumindest teilweise zerreibbar ist, sowie
- mindestens zwei Raupenlaufwerke (8), die an einander gegenüberliegenden Enden einer Vorderachse des Feldhäckslers (1) angeordnet sind und jeweils zwei einander gegenüberliegende, von einem Laufgurt (11) umspannte Haupträder (9) sowie mindestens ein zwischen den Haupträdern (9) angeordnetes Hilfsrad (10) umfassen,
das Verfahren umfassend die folgenden Verfahrensschritte:
a) Ausgehend von einer Aktivposition, in der sich das Konditionierorgan (6) in einem Wirkverbund mit anderen Arbeitsorganen des Feldhäckslers (1) befindet, wird das Konditionierorgan (6) in eine Passivposition überführt, in der es aus dem Wirkverbund herausgelöst ist.
b) Das Konditionierorgan (6) wird ausgehend von seiner Passivposition relativ zu dem übrigen Feldhäcksler (1) bewegt bis es sich vollständig außerhalb des Feldhäckslers (1) befindet,
c) das Konditionierorgan (6) wird an einer Ausbauseite (15) des Feldhäckslers (1) in eine Richtung quer zu einer Längsachse (14) des Feldhäckslers (1) seitlich des Feldhäckslers (1) sowie oberhalb eines der Ausbauseite (15) zugeordneten Raupenlaufwerks (8) aus dem übrigen Feldhäcksler (1) entnommen.

8. Verfahren nach Anspruch 7, **dadurch gekennzeichnet, dass** das Konditionierorgan (6) - in Längsrichtung des Feldhäckslers (1) betrachtet - innerhalb eines Längsbereichs (19) des der Ausbauseite (15) zugeordneten Raupenlaufwerks (8) sowie - in vertikale Richtung betrachtet - oberhalb des genannten Raupenlaufwerks (8) aus dem übrigen Feldhäcksler (1) entnommen wird.

9. Verfahren nach Anspruch 7 oder 8, **dadurch gekennzeichnet, dass** das Konditionierorgan (6) ausgehend von seiner Aktivposition zunächst in eine Richtung parallel zu der Längsachse (14) des Feldhäckslers (1) nach hinten bewegt wird, bis es sich in seiner Passivposition befindet, wobei vorzugsweise sich das Konditionierorgan (6) bei Vorliegen in seiner Passivposition in einem Bereich eines seitlichen Freiquerschnitts (13) des Feldhäckslers (1) befindet.

10. Verfahren nach einem der Ansprüche 7 bis 9, **dadurch gekennzeichnet, dass** das Konditionierorgan (6) im Zuge seiner Entnahme aus dem Feldhäcksler (1) mittels einer Entnahmeeinrichtung (20) zunächst ausgehend von seiner Passivposition angehoben und sodann seitlich aus dem Feldhäcksler (1) entnommen wird.

## Claims

1. A forage harvester (1) for chopping harvested material (2), comprising:
- at least one conditioning unit (6) for conditioning chopped harvested material (2), as well as
- at least two track roller units (8) disposed on opposing ends of a front axle of the forage harvester (1).
wherein the harvested material (2) can be at least partially crushed by means of the conditioning unit (6),
wherein each of the track roller units (8) has two main wheels (9) which are one behind the other in the longitudinal direction of the forage harvester (1) and opposite each other, at least one auxiliary wheel (10) disposed between the main wheels (9), as well as at least one endless belt (11) which encompasses the main wheels (9),
**characterized in that**
starting from an active position in which it is operatively connected to the rest of the working units of the forage harvester (1), the conditioning unit (6) can be transferred into a passive position in which the conditioning unit (6) is out of operative connection,
wherein, starting from its passive position, the conditioning unit can be removed from the rest of the forage harvester (1), and a free cross section (13) is located on a removal side (15) of the forage harvester (1) through which, starting from its passive position, the conditioning unit (6) can be moved out of the rest of the forage harvester (1) laterally of the forage harvester as well as over the track roller unit (8) associated with the removal side (15).

2. The forage harvester (1) according to claim 1, **characterized in that** in order to transfer it from its active position to its passive position, the conditioning unit (6) can be moved rearwards in a direction parallel to a longitudinal axis (14) of the forage harvester (1) using a guide device.

3. The forage harvester (1) according to claim 1 or claim 2, **characterized in that** the main wheels (9) of at least one of the track roller units (8), preferably both track roller units (8), have a same diameter.

4. The forage harvester (1) according to one of claims 1 to 3, **characterized in that** the endless belt (11) of at least that track roller unit (8) which is disposed on the removal side (15) of the forage harvester (1) extends continuously - when observed in the vertical direction - below a bottom edge (17) of the conditioning unit (6) in its passive position.

5. The forage harvester (1) according to one of claims 1 to 4, **characterized in that** a height (24), measured vertically from a substrate, of at least that track roller unit (8) which is disposed on the removal side (15) of the forage harvester (1) is a maximum of 100 cm, preferably a maximum of 90 cm, more preferably a maximum of 80 cm at a highest point of the track roller unit (8).

6. The forage harvester (1) according to one of claims 1 to 5, **characterized in that** the conditioning unit (6) has at least two rollers (18) which can be driven in rotation about their respective longitudinal axis which between them delimit a working gap, so that harvested material fed to the conditioning unit (6) can be crushed by means of the rollers as it passes through the working gap.

7. A method for modifying a forage harvester (1), the forage harvester (1) comprising:
- at least one conditioning unit (6) by means of which chopped harvested material (2) fed to it can be at least partially crushed, as well as
- at least two track roller units (8) which are disposed on opposing ends of a front axle of the forage harvester (1) and which each comprise two opposing main wheels (9) encompassed by an endless belt (11) as well as at least one auxiliary wheel (10) disposed between the main wheels (9),
the method comprising the following steps of the method:
a) starting from an active position in which the conditioning unit (6) is operatively connected to other working units of the forage harvester (1), the conditioning unit (6) is transferred into a passive position in which it is not operatively connected,
b) starting from its passive position relative to the rest of the forage harvester (1), the conditioning unit (6) is moved until it is completely outside the forage harvester (1),
c) the conditioning unit (6) is removed from the rest of the forage harvester (1) at a removal side (15) of the forage harvester (1) in a direction transverse to a longitudinal axis (14) of the forage harvester (1) laterally of the forage harvester (1) as well as over a track roller unit (8) associated with the removal side (15).

8. The method according to claim 7, **characterized in that** - when observed in the longitudinal direction of the forage harvester (1) - the conditioning unit (6) is removed from the rest of the forage harvester (1) within a longitudinal zone (19) of the track roller unit (8) associated with the removal side (15) as well as - when observed in the vertical direction - over said track roller unit (8).

9. The method according to claim 7 or claim 8, **characterized in that** starting from its active position, the conditioning unit (6) is initially moved rearwards in a direction parallel to the longitudinal axis (14) of the forage harvester (1) until it is located in its passive position, wherein preferably, when in its passive position, the conditioning unit (6) is located in a region of a lateral free cross section (13) of the forage harvester (1).

10. The method according to one of claims 7 to 9, **characterized in that** during the course of its removal from the forage harvester (1) by means of a removal device (20), starting from its passive position, the conditioning unit (6) is initially lifted and then removed laterally from the forage harvester (1).

## Revendications

1. Ensileuse (1) pour hacher du produit de récolte (2), incluant
- au moins un organe de conditionnement (6) pour conditionner du produit de récolte haché (2) ainsi que
- au moins deux trains de roulement à chenilles (8) disposés à des extrémités mutuellement opposées d'un essieu avant de l'ensileuse (1),
le produit récolté (2) étant au moins en partie broyé au moyen de l'organe de conditionnement (6),
les trains de roulement à chenilles (8) comportant respectivement deux roues principales (9) situées l'une derrière l'autre dans la direction longitudinale de l'ensileuse (1) ainsi qu'à l'opposé l'une de l'autre, au moins une roue auxiliaire (10) disposée entre les roues principales (9) ainsi qu'au moins une bande de roulement (11) entourant les roues principales (9),
**caractérisée en ce que** l'organe de conditionnement (6) peut être transféré d'une position active, dans laquelle il se trouve en liaison active avec d'autres organes de travail de l'ensileuse (1), vers une position passive dans laquelle l'organe de conditionnement (6) est dégagé de la liaison active,
l'organe de conditionnement pouvant, à partir de sa position passive, être retiré du reste de l'ensileuse (1), et **en ce que**
sur un côté dépose (15) de l'ensileuse (1) se trouve une section libre (13) à travers laquelle, à partir de sa position passive, l'organe de conditionnement (6) peut être retiré du reste de l'ensileuse (1) par le côté de l'ensileuse ainsi qu'au-dessus du train de roulement à chenilles (8) associé au côté dépose (15).

2. Ensileuse (1) selon la revendication 1, **caractérisée en ce que**, pour passer de sa position active à sa position passive, l'organe de conditionnement (6) est déplaçable vers l'arrière, au moyen d'un équipement de guidage, dans une direction parallèle à un axe longitudinal (14) de l'ensileuse (1).

3. Ensileuse (1) selon une des revendications 1 ou 2, **caractérisée en ce que** les roues principales (9) au moins d'un des trains de roulement à chenilles (8), de préférence des deux trains de roulement à chenilles (8), présentent le même diamètre.

4. Ensileuse (1) selon une des revendications 1 à 3, **caractérisée en ce que** la bande de roulement (11) au moins du train de roulement à chenilles (8) qui est disposé sur le côté dépose (15) de l'ensileuse (1), s'étend de manière continue - vue dans la direction verticale - sous un bord inférieur (17) de l'organe de conditionnement (6) se trouvant dans sa position passive.

5. Ensileuse (1) selon une des revendications 1 à 4, **caractérisée en ce qu'**une hauteur (24), mesurée verticalement à partir d'un terrain, au moins du train de roulement à chenilles (8) qui est disposé sur le côté dépose (15) de l'ensileuse (1) est égale, sur un point le plus haut du train de roulement à chenilles (8), à maximum 100 cm, de préférence à maximum 90 cm, plus préférentiellement à maximum 80 cm.

6. Ensileuse (1) selon une des revendications 1 à 5, **caractérisée en ce que** l'organe de conditionnement (6) comprend au moins deux rouleaux (18) qui sont respectivement entraînables en rotation autour de leur axe longitudinal et qui délimitent entre eux un interstice de travail, de sorte que le produit de récolte amené à l'organe de conditionnement (6) est broyé au moyen des rouleaux au cours du passage à travers l'interstice de travail.

7. Procédé de conversion d'une ensileuse (1), l'ensileuse (1) incluant
- au moins un organe de conditionnement (6) au moyen duquel du produit de récolte haché (2) qui lui est amené peut être au moins en partie broyé, ainsi que
- au moins deux trains de roulement à chenilles (8) qui sont disposés à des extrémités mutuellement opposées d'un essieu avant de l'ensileuse (1) et comprennent respectivement deux roues principales (9) situées respectivement à l'opposé l'une de l'autre et entourées par une bande de roulement (11) ainsi qu'au moins une roue auxiliaire (10) disposée entre les roues principales (9),
le procédé incluant les étapes de procédé suivantes :
a) à partir d'une position active dans laquelle l'organe de conditionnement (6) se trouve en liaison active avec d'autres organes de travail de l'ensileuse (1), l'organe de conditionnement (6) est transféré dans une position passive dans laquelle il est dégagé de la liaison active.
b) À partir de sa position passive, l'organe de conditionnement (6) est déplacé par rapport au reste de l'ensileuse (1) jusqu'à ce qu'il se trouve entièrement à l'extérieur de l'ensileuse (1).
c) L'organe de conditionnement (6) est retiré du reste de l'ensileuse (1) au niveau d'un côté dépose (15) de l'ensileuse (1), dans une direction transversale à un axe longitudinal (14) de l'ensileuse (1), par le côté de l'ensileuse (1) ainsi qu'au-dessus d'un train de roulement à chenilles (8) associé au côté dépose (15).

8. Procédé selon la revendication 7, **caractérisé en ce que** l'organe de conditionnement (6) - vu dans la direction longitudinale de l'ensileuse (1) - est retiré du reste de l'ensileuse (1) à l'intérieur d'une zone longitudinale (19) du train de roulement à chenilles (8) associé au côté dépose (15) ainsi que - vu dans la direction verticale - au-dessus dudit train de roulement à chenilles (8).

9. Procédé selon la revendication 7 ou 8, **caractérisé en ce qu'**à partir de sa position active, l'organe de conditionnement (6) est d'abord déplacé vers l'arrière dans une direction parallèle à l'axe longitudinal (14) de l'ensileuse (1) jusqu'à ce qu'il se trouve dans sa position passive, de préférence l'organe de conditionnement (6) se trouvant, une fois dans sa position passive, dans une zone d'une section libre latérale (13) de l'ensileuse (1).

10. Procédé selon une des revendications 7 à 9, **caractérisé en ce qu'**au cours de son retrait hors de l'ensileuse (1), l'organe de conditionnement (6) est d'abord levé à partir de sa position passive au moyen d'un équipement de retrait (20) et ensuite retiré de l'ensileuse (1) par le côté.
